# EUROPÄISCHE PATENTSCHRIFT

(11) **EP 1 460 299 B1**
(45) Veröffentlichungstag und Bekanntmachung des Hinweises auf die Patenterteilung: **30.04.2008**
(21) Anmeldenummer: 04004309.3
(22) Anmeldetag: 26.02.2004
(51) Int. Cl.: F16D 25/12, F16D 25/08

(54) **Hydraulische Kupplungsbetätigung für ein Kraftfahrzeug**
Hydraulic clutch actuator for a motor vehicle
Actionneur hydraulique d'embrayage pour un véhicule à moteur

(30) Priorität: 15.03.2003 DE 10311481
(43) Veröffentlichungstag der Anmeldung: 22.09.2004
(73) Patentinhaber: Dr.Ing. h.c. F. Porsche Aktiengesellschaft, 70435 Stuttgart (DE)
(72) Erfinder: Esser, Joachim, 71277 Rutesheim (DE)

(56) Entgegenhaltungen:
- DE-A1- 4 142 324
- US-A- 2 716 997
- US-A- 3 960 172

## Beschreibung

Die Erfindung betrifft eine hydraulische Kupplungsbetätigung für ein Kraftfahrzeug gemäß den Merkmalen des Oberbegriffs des Anspruchs 1.

Bei hydraulischen Kupplungsbetätigungen, bei denen der im Druckraum des Geberzylinders erzeugte Flüssigkeitsdruck am Kolben des ebenfalls in einer Hydraulikleitung integrierten Nehmerzylinders eine Kraft erzeugt, mit deren Hilfe die Kupplung ausgerückt wird, ist es bekannt, mit Hilfe einer in der Hydraulikleitung integrierten Drosseleinrichtung eine von der Strömungsrichtung abhängige, unterschiedliche Durchflusscharakteristik zu erzeugen. Für den Ausrückvorgang der Reibungskupplung ist ein ungedrosselter Durchfluss gewünscht, während für den Einrückvorgang ein gedrosselter Durchfluss erwünscht ist, wenn ein zu schnelles Einrücken der Fahrzeugkupplung, insbesondere beim ungewollten Abrutschen vom Kupplungspedal, im Antriebsstrang Spitzenmomente erzeugt, die zu Zerstörungen von Antriebstrangbauteilen führen können. Dazu sind aus dem Stand der Technik verschiedene Ausführungsformen von Drosseleinrichtungen bekannt (siehe z. B. US-A-3 960 172, DE 198 11 337 A1 oder DE 41 42 324 C2).

Aufgabe der Erfindung ist es, eine aus wenigen Bauteilen bestehende Drosseleinrichtung zu entwickeln, mit der zuverlässig der insbesondere eingangs beschriebene "misuse" der Kupplung abgefangen wird, ohne jedoch den gesamten Zeitablauf des Ein- bzw. Auskuppelns spürbar zu verlängern.

Die Aufgabe wird durch die im Anspruch 1 genannten Merkmale gelöst.

Die Vorrichtung zur Begrenzung der Einrückgeschwindigkeit der Kupplung zeichnet sich durch einen einfachen Aufbau aus, der im wesentlichen aus einem in einem Zylindergehäuse geführten Außenkolben, einen im Außenkolben längsverschieblich geführten Innenkolben, sowie einer am Innenkolben angebrachten Drosselnut mit vorzugsweise veränderlichem Drosselquerschnitt besteht. Die erfindungsgemäße Drosseleinrichtung kann als separates Bauteil innerhalb der Hydraulikleitung integriert sein; darüber hinaus ist es auch möglich, die Drosseleinrichtung auf platzsparende Art und Weise im Geber- oder Nehmerzylinder zu integrieren.

Durch die in den Unteransprüchen aufgeführten Merkmale sind vorteilhafte Ausgestaltungen und Weiterbildungen der hydraulischen Kupplungsbetätigung möglich.

Die zur Drosselung des Volumenstromes vorgesehene Drosselnut ist auf einfache Art und Weise in der Mantelfläche des Innenkolbens ausgebildet und weist einen über den Hub des Innenkolbens veränderlichen Querschnitt auf.

Der Drosselquerschnitt ist so ausgebildet, dass er sich zum Eingriffszeitpunkt der Kupplung verringert, so dass sicher gestellt ist, dass die Einrückgeschwindigkeit auf einen zulässigen Wert begrenzt ist, während vor und nach dem Einrückzeitpunkt der Drosselwiderstand verringert wird. Damit ist eine Sicherheitsfunktion für den "misuse" der Kupplung bereit gestellt, während sich der gesamte Zeitablauf des Einkuppelns nicht merklich verlängert. Durch ein im Innenkolben aufgenommenes Federelement, welches sich einerseits am Außenkolben und andererseits im Innenkolben abstützt, ist sicher gestellt, dass sich der Innenkolben bei eingerückter Kupplung stets in seiner ausgefahrenen Position befindet.

In der Zeichnung ist ein Ausführungsbeispiel der Erfindung dargestellt, das nachfolgend näher beschrieben ist.

Es zeigen:
- Fig. 1: eine schematische Darstellung einer hydraulischen Kupplungsbetätigung im Antriebsstrang eines Kraftfahrzeuges,
- Fig. 2: eine Drosseleinrichtung in einer ersten Betriebsstellung,
- Fig. 3: die Drosseleinrichtung in einer zweiten Betriebsstellung,
- Fig. 4: die Drosseleinrichtung in einer dritten Betriebsstellung,
- Fig. 5: die Drosseleinrichtung in einer vierten Betriebsstellung und
- Fig. 6: ein Diagramm zur Darstellung der Einrückgeschwindigkeit der Kupplung.

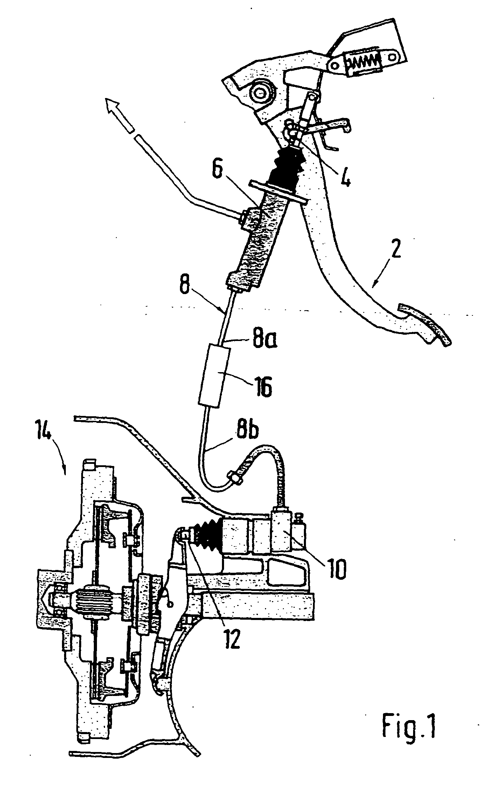

In Fig. 1 ist das Kupplungspedal 2 eines Kraftfahrzeugs erkennbar, das über einen Drehpunkt an einem nicht näher dargestellten Fahrzeugaufbau schwenkbar gelagert ist. Eine Kolbenstange 4 eines insgesamt mit 6 bezeichneten Geberzylinders greift gelenkig gelagert am Kupplungspedal 2 an. Vom Geberzylinder 6 führt eine Hydraulikleitung 8 zu einem Nehmerzylinder 10. Eine Kolbenstange 12 des Nehmerzylinders 10 betätigt den Ausrückmechanismus einer aus dem Stand der Technik bekannten Reibungskupplung 14, die im Antriebsstrang eines Kraftfahrzeugs angeordnet ist.

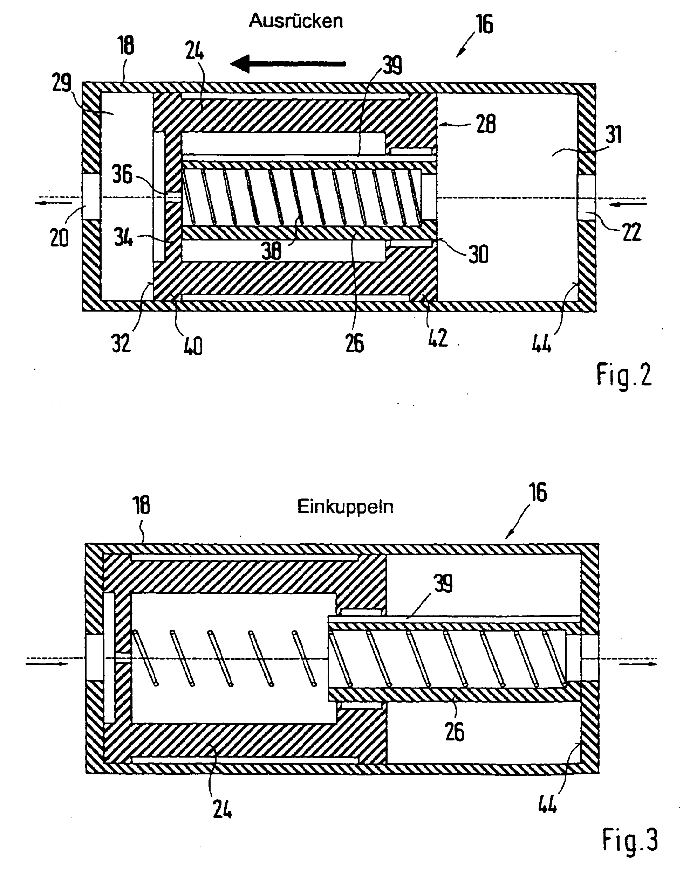

Zwischen Geberzylinder 6 und Nehmerzylinder 10 ist in der Hydraulikleitung 8 eine Drosseleinrichtung 16 angeordnet, deren Aufbau anhand der Fig. 2 im folgenden näher beschrieben ist.

Die Drosseleinrichtung 16 weist ein zylinderförmiges Außengehäuse 18 auf, das über zwei an seinen Stirnseiten angeordneten Öffnungen und nicht näher dargestellte Anschlüsse in der Hydraulikleitung 8 eingebunden ist. Im Gehäuse 18 ist ein erster Kolben, im folgenden als Außenkolben 24 bezeichnet, und im Außenkolben 24 ist ein zweiter Kolben, im folgenden als Innenkolben 26 bezeichnet, längsverschieblich geführt. Beide Kolben 24, 26 unterteilen den Zylinderraum in zwei Druckräume 29 und 31, wobei Druckraum 29 über den Druckleitungsabschnitt 8b mit dem Nehmerzylinder 10 und Druckraum 31 über den Druckleitungsabschnitt 8a mit dem Geberzylinder 6 in Verbindung steht. In der Stirnseite 28 des Außenkolbens 24 ist eine zentrale Öffnung 30 vorgesehen, in der der Innenkolben 26 geführt ist, der an seinen beiden Stirnseiten offen ausgebildet ist. Der Außenkolben 24 ist an seinem stirnseitigen Ende 32 mit einem Kolbenboden 34 versehen, der als ein erster Endanschlag (siehe Fig. 2) für den Innenkolben 26 vorgesehen ist. Im Kolbenboden 34 ist zentral eine Bohrung 36 angeordnet, deren Funktion später noch näher erläutert ist. Im Inneren des hohl ausgebildeten Kolbens 26 ist eine Spiralfeder 38 aufgenommen, die dafür sorgt, dass sich der Innenkolben 26 bei ausgerückter Kupplung stets in einer gemäß Fig. 3 dargestellten ausgefahrenen Position befindet. In der Mantelfläche des Innenkolbens 24 ist eine durchgehende Längsnut 39 eingebracht, deren Querschnitt sich über den Kolbenhub verändert.

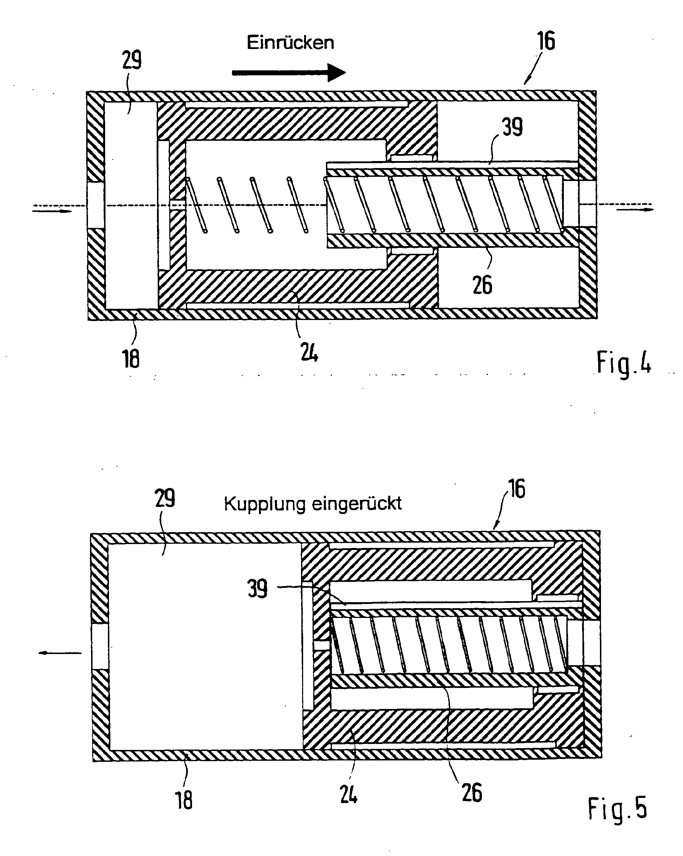

Die beiden Zylinderenden des Außenkolbens 24 sind mit einem ringförmigen Absatz 40 und 42 versehen, die zur Führung des Außenkolbens 24 innerhalb des Außengehäuses 18 dienen. Im nachfolgenden wird die Funktionsweise der hydraulischen Drosseleinrichtung 16 anhand des Ein- und Auskuppelvorgangs näher beschrieben:
1. Ausrückvorgang
   Beim Ausrückvorgang der Kupplung wird über das Kupplungspedal 2 und den Geberzylinder 6 der Flüssigkeitsdruck des Hydrauliköls zum Druckraum 31 übertragen; dieser bewirkt an der Stirnseite 28 des Außen- und des Innenkolbens 24, 26 sowie auf der Innenseite des Kolbenbodens 34 eine Kraft, die den Innen- und den Außenkolben 26, 24 in die in Fig. 2 dargestellte Richtung verschiebt, bis der Außenkolben 24 mit seiner Stirnfläche 32 am Außengehäuse 18 zum Anliegen kommt. Die im Druckraum 29 befindliche Hydraulikflüssigkeit wird weiter zum Nehmerzylinder 10 "geschoben" und auf den Stößel 12 übertragen, wodurch über die Linearbewegung des Stößels 12 der Ausrücker betätigt und die Kupplung 14 ausgerückt wird. Nach Erreichen eines stationären Zustands wird der Innenkolben 24 durch die Spiralfeder 38 in die in Fig. 3 dargestellte Lage gedrückt, bei der er stirnseitig an der Innenwand 44 des Aussengehäuses 18 anliegt.
2. Einkuppelvorgang
   In den Fig. 3 bis 5 ist der Einkupplungsvorgang näher dargestellt. Beim Einkuppeln strömt die Hydraulikflüssigkeit vom Nehmerzylinder 10 zurück zum Druckraum 29 der Drosseleinrichtung 16 und bewirkt, dass der Außenkolben 24 in die in Fig. 4 dargestellte Richtung innerhalb des Außengehäuses 18 verschoben wird. Der Gesamt - Verstellweg des Außenkolbens 24 bildet dabei das komplette Hubvolumen des Nehmerzylinders ab. Beim Einrücken der Kupplung leitet der Außenkolben 24 das Volumen des Nehmerzylinders 10 zunächst ungedrosselt über einen großen Querschnitt der in der Mantelfläche des Innenkolbens 26 ausgebildeten Längsnut 39 zum Geberzylinder 6 weiter. Wie bereits eingangs ausgeführt, ist die in der Mantelfläche des Innenkolbens 26 eingebrachte Längsnut 39 mit einem veränderlichen Drosselquerschnitt versehen, der sich über den Kolbenhubweg wie folgt verändert. Am Eingriffspunkt der Kupplung verringert sich der Drosseldurchmesser bzw. Drosselquerschnitt der Längsnut, so dass die Bewegung des Außenkolbens 24 und damit der weiter geleitete Volumenstrom zum Einrückzeitpunkt abgebremst wird. Nach der Eingriffsstrecke erweitert sich der Querschnitt der Längsnut 39 wieder, so dass die Kupplung nahezu ungedrosselt in den voll eingerückten Zustand überführt werden kann.

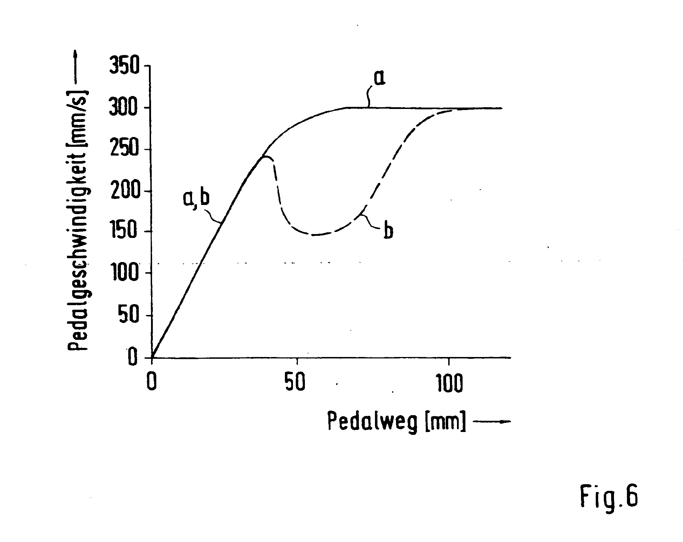

Der Einrückvorgang ist graphisch in Fig. 6 dargestellt, wobei Kurve a den Verlauf der Pedalgeschwindigkeit über den Kupplungs - Pedalweg bei einem schnellen Einrückvorgang, wie er sich z.B. beim Abrutschen vom Kupplungspedal darstellt, wiedergibt. Ohne die erfindungsgemäße Drosseleinrichtung können dabei Pedalgeschwindigkeiten von über 300mm/s erreicht werden. Mit Hilfe des Einsatzes der Drosseleinrichtung 16 wird zum Einrückzeitpunkt die Pedalgeschwindigkeit auf z. B. 150mm/s reduziert, um im Eingriffsbereich der Kupplung auftretende Spitzenmomente abzubauen. Wie anhand von Kurve b erkennbar, wird nach dem Einrückzeitpunkt der Kupplung durch den variablen Drosselquerschnitt in der Längsnut 39 die Pedalgeschwindigkeit bzw. die Verstellgeschwindigkeit des Aussenkolbens 24 wieder erhöht. Damit ist trotz dieser Sicherheits- Drosseleinrichtung die gesamte Einrückzeit des Kupplungspedals kaum merklich verlängert. Die erfindungsgemäße Drosseleinrichtung kann sowohl als separates Bauteil zwischen Kupplungsnehmer- und Kupplungsgeberzylinder angeordnet sein, als auch in den beiden zuletzt genannten Bauteilen integriert sein.

## Patentansprüche

1. Hydraulische Kupplungsbetätigung für ein Kraftfahrzeug, mit einem dem Kupplungspedal (2) zugeordneten Geberzylinder (6) und einem die Kupplung beaufschlagenden Nehmerzylinder (10), wobei Geber- und Nehmerzylinder (6, 10) in einer zwischen Kupplungspedal (2) und Kupplung (14) verlaufenden Hydraulikleitung (8) integriert sind, sowie mit einer in der Hydraulikleitung (8) angeordneten hydraulischen Drosseleinrichtung (16), wobei die Drosseleinrichtung (16) einen in einem Zylindergehäuse (18) geführten Außenkolben (24) aufweist, in dem ein Innenkolben (26) längsverschieblich geführt ist, wobei der Innenkolben (26) eine Drosselnut (39) aufweist,
**dadurch gekennzeichnet, dass**
bei ausgerückter Kupplung der Innenkolben (26) aus dem Außenkolben (24) ausgefahren ist, und bei eingerückter Kupplung der Innenkolben (26) in den Außenkolben (24) eingefahren ist.

2. Hydraulische Kupplungsbetätigung nach Anspruch 1, **dadurch gekennzeichnet, dass** die, Drosselnut (39) in der Mantelfläche des Innenkolbens (26) ausgebildet ist und über den Hub des Innenkolbens (26) einen veränderlichen Querschnitt aufweist.

3. Hydraulische Kupplungsbetätigung nach Anspruch 1 oder 2, **dadurch gekennzeichnet, dass** sich der Drosselquerschnitt am Eingriffspunkt der Kupplung verringert und danach sich wieder erweitert.

4. Hydraulische Kupplungsbetätigung nach einem der vorhergehenden Ansprüche, **dadurch gekennzeichnet, dass** im Innenkolben (26) ein Federelement (38) aufgenommen ist, das sich einerseits an einer Wand (34) des Außenkolbens (24) und andererseits im Innenkolben (26) abstützt.

## Claims

1. Hydraulic clutch actuator for a motor vehicle, having a master cylinder (6) which is assigned to the clutch pedal (2) and having a slave cylinder (10) which acts on the clutch, with the master and slave cylinders (6, 10) being integrated in a hydraulic line (8) which runs between the clutch pedal (2) and the clutch (14), and having a hydraulic throttle device (16) which is arranged in the hydraulic line (8), with the throttle device (16) having an outer piston (24) which is guided in a cylinder housing (18) and in which an inner piston (26) is guided in a longitudinally movable manner, with the inner piston (26) having a throttle groove (39),
**characterized in that**
when the clutch is disengaged, the inner piston (26) is deployed out of the outer piston (24), and when the clutch is engaged, the inner piston (26) is retracted into the outer piston (24).

2. Hydraulic clutch actuator according to Claim 1, **characterized in that** the throttle groove (39) is formed in the lateral surface of the inner piston (26) and has a varying cross section over the stroke of the inner piston (26).

3. Hydraulic clutch actuator according to Claim 1 or 2, **characterized in that** the throttle cross section is reduced at the engagement point of the clutch and widens again thereafter.

4. Hydraulic clutch actuator according to one of the preceding claims, **characterized in that** a spring element (38) is held in the inner piston (26), which spring element (38) is supported at one side against a wall (34) of the outer piston (24) and at the other side in the inner piston (26).

## Revendications

1. Actionneur hydraulique d'embrayage pour un véhicule automobile, avec un cylindre émetteur (6) associé à la pédale d'embrayage (2) et un cylindre récepteur (10) actionnant l'embrayage, dans lequel les cylindres émetteur et récepteur (6, 10) sont intégrés dans une conduite hydraulique (8) reliant la pédale d'embrayage (2) et l'embrayage (14), ainsi qu'avec un dispositif d'étranglement hydraulique (16) disposé dans la conduite hydraulique (8), dans lequel le dispositif d'étranglement (16) comprend un piston extérieur (24) guidé dans un boîtier cylindrique (18), et dans lequel un piston intérieur (26) est guidé en mouvement longitudinal, dans lequel le piston intérieur (26) présente une rainure d'étranglement (39), **caractérisé en ce que**, lorsque l'embrayage est débrayé, le piston intérieur (26) est sorti du piston extérieur (24), et lorsque l'embrayage est embrayé, le piston intérieur (26) est rentré dans le piston extérieur (24).

2. Actionneur d'embrayage hydraulique selon la revendication 1, **caractérisé en ce que** la rainure d'étranglement (39) est formée dans la surface latérale du piston intérieur (26) et présente une section transversale variable sur la course du piston intérieur (26).

3. Actionneur d'embrayage hydraulique selon la revendication 1 ou 2, **caractérisé en ce que** la section transversale d'étranglement est réduite au point de contact de l'embrayage et s'élargit ensuite de nouveau.

4. Actionneur d'embrayage hydraulique selon l'une quelconque des revendications précédentes, **caractérisé en ce qu'**il se trouve dans le piston intérieur (26) un élément de ressort (38), qui prend appui d'une part sur une paroi (34) du piston extérieur (24) et d'autre part dans le piston intérieur (26).
